Europäisches Patentamt

(19) European Patent Office   (11) Numéro de publication: **0 053 546**

Office européen des brevets   **B1**

(12) **FASCICULE DE BREVET EUROPEEN**

(45) Date de publication du fascicule du brevet: **17.04.85**   (51) Int. Cl.⁴: **G 01 M 3/22, G 01 M 3/28**

(21) Numéro de dépôt: **81401854.5**

(22) Date de dépôt: **23.11.81**

(54) **Procédé et dispositif de détection, à distance, de défauts d'étanchéité d'une conduite de transport d'un fluide, immergée dans un fluide ambiant.**

(30) Priorité: **24.11.80 FR 8024892**

(43) Date de publication de la demande:
**09.06.82 Bulletin 82/23**

(45) Mention de la délivrance du brevet:
**17.04.85 Bulletin 85/16**

(84) Etats contractants désignés:
**BE DE GB NL**

(56) Documents cités:
**FR-A-2 012 260**
**FR-A-2 215 577**
**US-A-3 184 958**
**US-A-3 276 247**
**US-A-3 943 965**

(73) Titulaire: **TECHNIGAZ**
**2, rue de la Bresle**
**F-78310 Maurepas (FR)**

(72) Inventeur: **Claude, Jean**
**4 Square d'Angiviller**
**F-78120 Rambouillet (FR)**

(74) Mandataire: **Weinstein, Zinovi et al**
**Cabinet Z. WEINSTEIN 20, Avenue de Friedland**
**F-75008 Paris (FR)**

Courier Press, Leamington Spa, England.

## Description

La présente invention concerne un procédé et un dispositif de détection, à distance, de défauts d'étanchéité d'une conduite de transport d'un fluide quelconque, immergée dans un fluide ambiant.

L'invention s'applique à la détection à distance des défauts d'étanchéité d'une conduite sous-marine de transport de fluide, tel qu'un gaz liquéfié ou analogue, entre un point à terre d'une région côtière et un point avancé en mer pour le déchargement et/ou le chargement d'un navire.

On sait déjà réaliser des conduites sous-marines de transport de fluide pour permettre le déchargement et/ou le chargement de navire en un point sensiblement éloigné de la côte. Toutefois, en cas de défaut d'étanchéité d'une telle conduite de transport, entraînant des fuites de l'un des fluides transporté ou ambiant vers l'autre, on ne sait pas détecter de manière continue et à distance ces fuites, et de plus après avoir constaté l'existence d'un fuite sur la longueur de la conduite, on ne sait pas la localiser de manière précise, sans inspection manuelle de toute la longueur de la conduite.

En effet, dans le document US—A—3 184 958 on décrit un procédé et un dispositif, notamment automatique, de détection et de localisation à distance de défauts d'étanchéité d'une enceinte de confinement de fluide, par exemple une conduite de transport d'un fluide quelconque, immergée dans un fluide ambiant. La conduite comprend un tube intérieur de transport (14), notamment métallique entouré par un tube extérieur (12) de préférence métallique, radialement espacé du tube intérieur en définissant un espace annulaire (21) susceptible d'être rempli d'un fluide auxiliaire. Des moyens de détection locale et des moyens de détection globale de fuite de l'un des fluides vers l'autre sont prévus. Les moyens de détection globale comprennent une source (58) de fluide auxiliaire, un dispositif d'alimentation (44, 46, 55) du fluide auxiliaire sous un débit variable et sous une pression réglable, et des moyens d'alarme (38, 60, 62). Le fluide auxiliaire est un mélange de gaz dont au moins le constituant principal est un gaz inerte tel que l'azote (colonne 3, lignes 10 à 16).

Ainsi, selon ce document on révèle un procédé comprenant une détection locale de fuite et une détection globale de fuite et l'émission d'un signal lors de la présence d'une fuite.

Dans les documents américains US—A—3 276 247 et US—A—3 943 965 on a préconisé également d'autres procédés et dispositifs de détection et de localisation à distance de défauts d'étanchéité d'une enceinte de confinement de fluide d'une conception beaucoup plus compliquée que celle décrite dans le document américain US—A—3 184 958.

Cependant, selon la solution préconisée dans le document US—A—3 184 958, lorsqu'on avait constaté que la conduite externe présentait un défaut d'étanchéité, il était alors nécessaire d'envoyer un opérateur inspecter la longueur totale de la conduite pour déceler le défaut d'étanchéité. Il est en outre évident que lorsque la conduite est immergée dans un milieu ambiant relativement hostile pour l'homme, à savoir les profondeurs marines, cette inspection de la conduite est très difficile et demande beaucoup de temps et une infrastructure importante. D'autre part, comme les conduites sous-marines de transport de fluide sont généralement enrobées par une gaine de béton, l'opérateur est souvent amené à détériorer ladite couche de protection pour déceler et localiser la ou les fuites de l'un des fluides. Enfin, la solution décrite dans le document US—A—3 184 958 ne permet pas de réaliser une détection en continu des défauts d'étanchéité de la conduite de transport.

La présente invention a pour but de résoudre tous ces problèmes en fournissant une solution qui permette de détecter et localiser à distance et en continu les défauts d'étanchéité de ladite conduite de transport.

Cette solution consiste selon la présente invention en un procédé, notamment automatique, de détection et de localisation à distance de défauts d'étanchéité d'une une conduite de transport d'un fluide quelconque, immergée dans un fluide ambiant, du type consistant à entourer la conduite de transport de fluide d'une couche confinée de fluide auxiliaire interposée entre la conduite et le fluide ambiant, ledit fluide auxiliaire étant un mélange de gaz dont au moins le constituant principal est un gaz inerte tel que l'azote, comprenant une détection locale de fuite et une détection globale de fuite et l'émission d'un signal lors de la présence d'une fuite, caractérisée en ce que ladite opération de détection globale consiste à entourer constamment la conduite de transport (1) de ladite couche confinée (11) de fluide auxiliaire qui est à une pression inférieure aux pressions respectives du fluide transporté et du fluide ambiant, à maintenir constamment en circulation ledit fluide auxiliaire sur toute la longueur de ladite conduite, et à déceler la présence d'au moins un des fluides respectivement transporté ou ambiant dans ledit fluide auxiliaire au moyen d'une surveillance ou d'un contrôle continu de la composition du courant de fluide auxiliaire sortant à une extrémité accessible de la conduite telle qu'une analyse aux infrarouges en la détermination de la limite inférieure d'explosivité dudit fluide.

Ainsi, selon l'invention, il est aisé de pratiquer l'analyse du courant de fluide auxiliaire sortant à une extrémité accessible de la conduite, pour déceler la présence du fluide ambiant ou transporté dans ledit fluide auxiliaire, sans qu'il soit nécessaire d'évoluer dans le milieu ambiant.

Selon une autre réalisation de l'invention, le procédé est applicable à une conduite enrobée d'une couche de matière solide entourée par le fluide auxiliaire dans lequel toute fuite de fluide transporté est canalisée généralement selon une direction circonférentielle le long de la paroi de ladite conduite de façon à accumuler ledit fluide en un volume continu et relativement réduit s'étendant le long de ladite conduite, et où la fuite accumulée est transférée au moins partiellement au fluide auxiliaire précité.

Une autre réalisation de l'invention consiste à effectuer le transfert du fluide transporté fuyard collecté vers la couche de fluide auxiliaire lorsque la pression du fluide transporté fuyard accumulé atteint une valeur déterminée.

Selon une autre réalisation de la présente invention, l'opération de détection locale de fuite du fluide transporté consiste à confiner la fuite accumulée du fluide transporté en subdivisant le volume d'accumulation en sections adjacentes, isolées de manière étanche les unes des autres, à déceler dans chaque section précitée la présence du fluide transporté, et en cas de présence dudit fluide transporté à émettre un signal pour déclencher une alarme.

Avantageusement, le signal précité correspondant à la présence du fluide transporté fuyard dans au moins l'une des sections précitées, est émis lorsque la pression du fluide transporté dans ladite section atteint une valeur déterminée.

Selon une autre réalisation de l'invention, la détection locale de la présence du fluide ambiant dans le fluide auxiliaire précité consiste à déceler en des points répartis statistiquement sur la longueur de la conduite et correspondant sensiblement aux points bas locaux de ladite conduite, la présence de fluide ambiant, et à émettre un signal en cas de détection pour déclencher une alarme.

Avantageusement, on émet un signal lorsque le niveau du fluide ambiant localement accumulé dans l'espace de confinement du fluide auxiliaire précité atteint une valeur déterminée.

La présente invention vise un dispositif de détection et de localisation à distance de défauts d'étanchéité d'une conduite de transport d'un fluide quelconque immergée dans un milieu ambiant fluide et comprenant un tube intérieur de transport, notamment métallique entouré par un tube extérieur de préférence métallique, radialement espacé du tube intérieur en définissant un espace annulaire susceptible d'être rempli d'un fluide auxiliaire, et des moyens de détection locale et des moyens de détection globale de fuite de l'un des fluides vers l'autre, lesdits moyens de détection globale comprenant une source de fluide auxiliaire, un dispositif d'alimentation du fluide auxiliaire sous un débit variable et sous une pression réglable, et des moyens d'alarme, caractérisé en ce que ledit espace annulaire est continu et s'étend sensiblement sur toute la longueur de la conduite, au moins un conduit de circulation dudit fluide auxiliaire est agencé dans l'espace annulaire et s'étend sensiblement sur toute la longueur de la conduite, des moyens d'évacuation sélective du fluide auxiliaire sont prévus à une extrémité accessible de la conduite, le dispositif d'alimentation constitue des moyens de balayage de l'espace annulaire par le fluide auxiliaire, et des moyens d'analyse de la composition du flux sortant du fluide auxiliaire à ladite extrémité accessible de la conduite, lesdits moyens d'alarme étant reliés aux moyens d'analyse.

Selon un mode de réalisation préféré de l'invention, la conduite est du type comprenant un tube de transport calorifugé extérieurement et une enveloppe, de préférence imperméable, de faible épaisseur entourant jointivement le calorifuge, et comprend selon l'invention, interposé entre ledit tube de transport et le calorifuge, un dispositif de canalisation des fuites de fluide transporté, et un dispositif de collecte desdites fuites canalisées communiquant avec le dispositif de canalisation. Avantageusement, selon l'invention, le dispositif de collecte a une section transversale réduite s'étendant sur toute la longueur du tube, et est muni d'au moins un organe de mise en communication avec l'espace annulaire précité entourant ledit tube calorifugé. Cet organe est selon un mode de réalisation préféré de l'invention, une soupape à ouverture automatique par la pression régnant dans ledit dispositif de collecte.

Selon une autre réalisation de l'invention, le dispositif de canalisation précité est constitué par au moins une couche de tissu, résistant au fluide transporté, enroulée de manière continue autour du tube de transport. Selon l'invention, ce tissu est avantageusement un tissu de verre à bouclettes libres et à tissage taffetas.

En outre, le dispositif de collecte précité est selon l'invention un conduit en forme sensiblement d'auge fixé sur ledit tissu et rempli d'une matière poreuse telle que par exemple une mousse polyuréthane à cellules éclatées ou analogue. Avantageusement, l'enveloppe définissant ledit dispositif de collecte est réalisée en matière plastique résistant à la pression, pour éviter la déformation dudit dispositif de collecte au cours de la construction de la conduite de transport.

Le dispositif selon l'invention est de plus caractérisé en ce que le dispositif de collecte précité est subdivisé en sections adjacentes longitudinalement successives, isolées de manière étanche les unes des autres, et des moyens de détection locale de fuite de fluide transporté comprenant ces sections et au moins un détecteur agencé sur chaque section indépendante précitée, ledit détecteur étant relié à des moyens d'alarme et étant avantageusement selon l'invention, un pressostat.

La subdivision dudit dispositif de collecte, selon l'invention, en sections indépendantes de longueur réduite par rapport à la longueur totale de la conduite permet une localisation, à distance, précise des fuites de fluide transporté, et donc cette détection permet à un opérateur d'effectuer une intervention ponctuelle et rapide pour remédier à ladite fuite de fluide transporté.

Le dispositif selon l'invention est de plus caractérisé en ce que les moyens de détection locale de fuite de fluide ambiant comprenant des détecteurs de présence de fluide ambiant dans l'espace annulaire, agencés dans ledit espace annulaire en étant répartis sur la longueur totale de la conduite, à des positions correspondant sensiblement aux points bas locaux de ladite conduite, lesdits détecteurs étant reliés à des moyens d'alarme. Selon l'invention, ces détecteurs de présence de fluide sont avantageusement des détecteurs de niveau du fluide ambiant localement accumulé dans l'espace annulaire, lesdits détecteurs émettant un signal transmis aux moyens d'alarme lorsque le niveau local du fluide ambiant accumulé atteint une valeur déterminée.

La conduite de transport d'un fluide, immergée dans un fluide ambiant tel que notamment une conduite de transport sous-marine d'un gaz liquéfié, proposée par l'invention, permet de détecter et de localiser, à distance, d'une manière certaine les défauts d'étanchéité de la conduite, grâce au double dispositif de détection de ces défauts.

En outre, en cas de fuite peu importante de l'un des fluides transporté ou ambiant vers l'autre, il est possible, selon l'invention, de stopper cette fuite en établissant une surpression dans l'espace annulaire interposé entre le fluide ambiant et le fluide transporté, sand nécessiter une intervention humaine sur la partie de conduite immergée.

L'invention sera mieux comprise, et d'autres réalisations, détails et avantages de celle-ci apparaîtront plus clairement au cours de la description explicative qui va suivre faite en se référant aux dessins schématiques annexés donnés uniquement à titre d'exemple non limitatif, et dans lesquels:

La figure 1 est une vue schématique générale illustrant le positionnement d'une conduite de transport de fluide, conforme à l'invention, sur un fond marin.

La figure 2 est une vue, à plus grande échelle, d'une coupe transversale selon la ligne II—II de la figure 1, illustrant une mode de réalisation de la conduite conforme à l'invention.

La figure 3 est une vue en coupe axiale selon la ligne III—III de la figure 2, illustrant notamment la structure de la conduite, selon l'invention, au niveau de raccordement de deux éléments de conduite et au niveau de jonction de deux sections indépendantes et adjacentes du dispositif de collecte des fuites de fluide transporté.

La figure 4 est une vue, à plus grande échelle, schématique et en coupe axiale de la partie IV de la figure 1, illustrant un premier mode de réalisation préféré de l'invention des moyens d'évacuation du fluide ambiant.

La figure 5 est une vue identique à la figure 4, illustrant un second mode de réalisation préféré de l'invention des moyens d'évacuation du fluide ambiant.

La figure 6 est un diagramme synoptique illustrant l'installation de détection à distance des défauts d'étanchéité d'une conduite de transport de fluide selon le principe de l'invention.

Les figures 7 et 8 sont des organigrammes illustrant respectivement les différentes phases de détection, à distance, de fuite de fluide transporté, et de fuite de fluide ambiant selon le principe de l'invention.

En se référant aux dessins annexés et plus particulièrement aux dessins 1, 2, 3, 4, 5, nous décrirons maintenant la structure d'une conduite 1 de transport d'un fluide immergée dans un fluide ambiant, conforme à l'invention, et comprenant des moyens de détection locale et globale, à distance, des défauts d'étanchéité de ladite conduite.

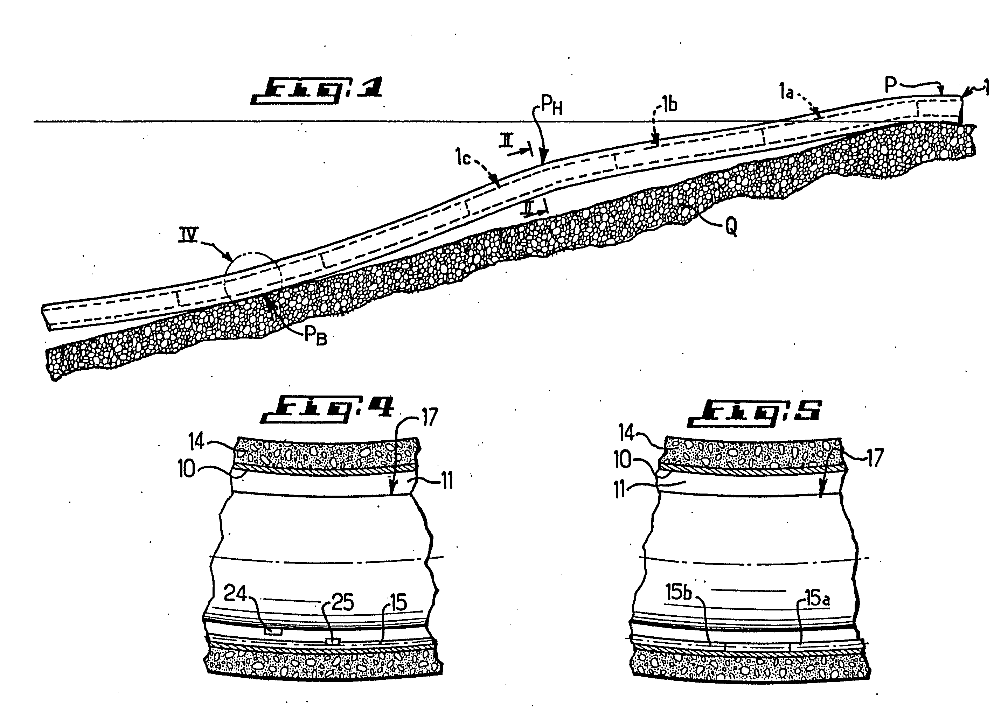

En se référant aux dessins, la figure 1 illustre le positionnement d'une conduite 1 sous-marine de transport d'un fluide, par exemple d'un gaz de pétrole liquéfié, sur le fond marin Q, entre un point avancé en mer (non représenté) de déchargement et/ou de chargement d'un navire de transport et un point à terre P d'une région côtière. De manière générale, et comme illustré partiellement par la figure 1, une conduite sous-marine 1 repose sur le fond marin Q en décrivant des oscillations de faible amplitude et présente donc sur toute sa longueur des points hauts $P_h$ et des points bas $P_b$. A titre d'exemple, pour une conduite sour-marine d'une longueur de 3.500 m, l'amplitude des oscillations est d'environ 2 m, en moyenne, et la fréquence de celles-ci d'environ 150 m.

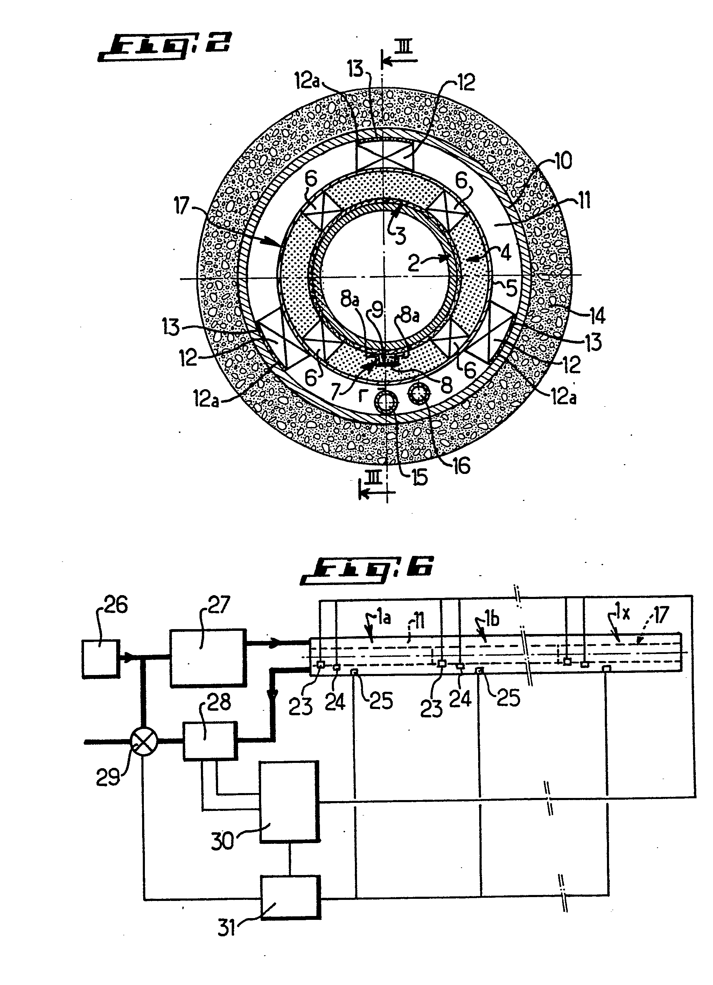

En se référant à la figure 2, la conduite 1 de transport d'un fluide, selon un mode de réalisation préféré de l'invention, comprend un tube 2 interne et métallique de transport de gaz de pétrole liquéfié. Le tube de transport 2 est noyé dans une couche 4 de matière présentant des qualités d'isolation thermique et de résistance mécanique convenables pour calorifuger le tube de transport 2. A titre d'exemple on peut citer le polyuréthane injecté sous forme de mousse dense. De plus, ladite couche 4 de calorifuge est entourée par une enveloppe ou gaine imperméable 5 de faible épaisseur. Cette gaine imperméable est constituée de feuilles d'acier enroulées en spirale, avec de préférence recouvrement des spires de soudage au niveau desdits recouvrements, et pour les tubes de plus faible diamètre, en matière plastique telle que par exemple du polyéthylène.

Comme cela est illustré sur la figure 2, il est avantageux de disposer des plots 6 de centrage autour desdits tubes de transport 2, pour enrouler aisément ladite gaine imperméable 5, en injecter le calorifuge dans l'espace défini entre le tube 2 et la gaine imperméable 5.

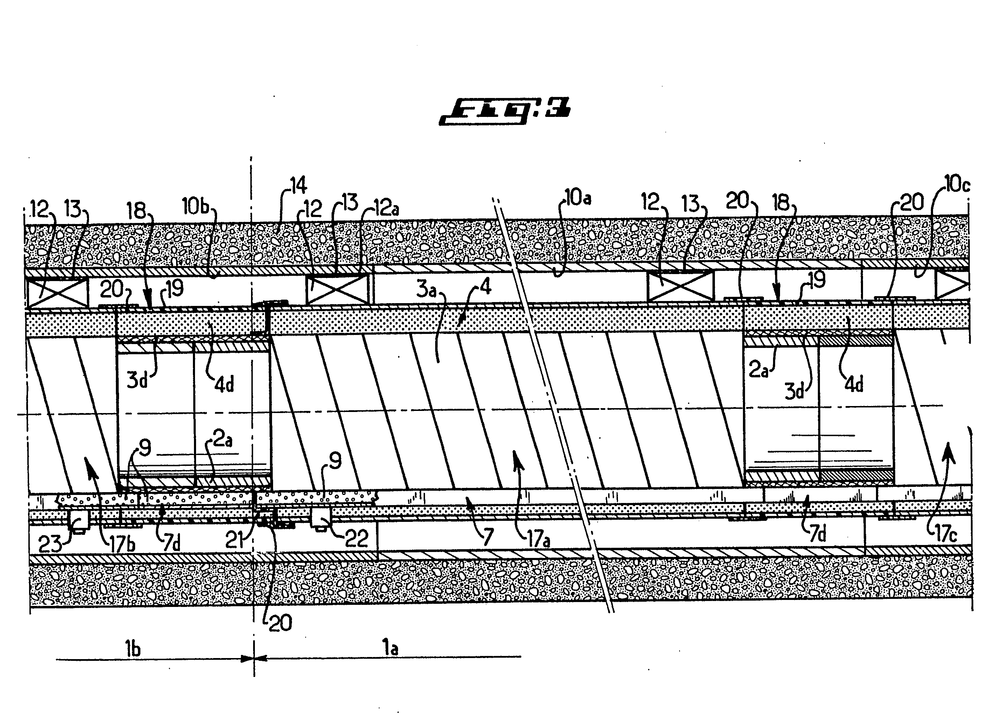

Le tube de transport 2 est recouvert extérieurement et jointivement par au moins une couche 3 de tissu enroulée en spirale, avec de préférence un recouvrement partiel des spires 3a (figure 3). Il est avantageux de coller les couches de tissu 3 sur la paroi externe du tube de transport 2 par une mince couche de résine par exemple une résine époxy.

Il est avantageux que la couche de tissu 3 soit réalisée au moyen d'une bande de tissu de verre de préférence siliconée à bouclettes libres et à tissage taffetas. En effet, les bouclettes libres du tissu de verre permettent une adhérence grandement améliorée du calorifuge 4 sur la surface dudit tissu. En outre, le tissage taffetas permet un meilleur drainage des fuites éventuelles de fluide transporté.

La conduite 1 comprend également sur toute sa longueur un dispositif de collecte 7 ou drain des fuites de fluides transporté et, canalisées par la couche de tissu de verre 3. Ce dispositif de collecte est constitué par une enveloppe 8 présentant à ses bords libres des pattes 8a permettant de la coller contre la couche de tissu de verre, de préférence à la partie inférieure du tube 2 et suivant une génératrice longitudinale de ladite conduite.

Le drain 7 est avantageusement rempli par un matière poreuse 9, par exemple une mousse polyuréthane à cellules éclatées.

En outre, l'enveloppe 8 du drain doit être réalisée en matière résistante à la pression, par exemple en matière plastique, pour éviter d'être déformée pendant la prise ou la polymérisation du calorifuge 4 injecté dans l'espace défini entre la couche de tissu de verre 3 et la gaine imperméable 5.

La conduite de transport de fluide comprend également une enveloppe extérieure métallique 10 ou tube extérieur de manière à définir un espace annulaire 11 entre ledit tube extérieur 10 et la gaine imperméable 5.

Pour positionner de manière correcte et aisée l'ensemble constitué par le tube de transport 2, la couche de verre 3, le calorifuge 4 et la gaine imperméable 5, appelé ci-après élément de conduite 17, on dispose des éléments de positionnement ou patins 12 sur la surface extérieure desdits éléments de conduite, et on positionne le tube extérieur 10 autour des patins. Il est avantageux de prévoir sur la surface 12a de contact des patins 12 avec le tube extérieur 10 un film de matériau 13 à coefficient de frottement faible pour faciliter les mouvements relatifs entre l'élément de conduite 17 et le tube extérieur 10.

Il est à noter que, sans sortir de l'esprit de l'invention, l'élément de conduite 17 et le tube extérieur 10 peuvent être concentriques ou excentrés de manière à augmenter la largeur de l'espace annulaire 11 à un endroit quelconque de la conduite, de préférence à sa partie inférieure.

En outre, la conduite 1 comprend, de manière connue en soi, une couche de protection externe 14 constituée par un enrobage de béton. Cet enrobage de béton est également utilisé comme lest de la conduite 1 pour la maintenir sur le fond marin Q.

La conduite 1 comprend au moins deux conduits disposés dans l'espace annulaire 11. Selon le mode de réalisation représenté par la figure 2, le conduit 16, qui s'étend sur toute la longueur de la conduite, est le conduit de circulation du fluide auxiliaire utilisé pour balayer l'espace annulaire 11. Le conduit 15 situé de préférence à la partie la plus inférieure de la conduite, constitue le dispositif d'évacuation du fluide ambiant éventuellement accumulé dans ledit espace annulaire. Ce dispositif d'évacuation sera décrit plus en détail ci-après.

Il est évident de comprendre que la longueur totale de la conduite est réalisée sur un chantier terrestre, par soudage bout-à-bout de plusieurs éléments de conduite 17 et de plusieurs éléments de tube extérieur 10, comme cela est illustré sur la figure 3. En effet, cette figure représente une partie de la conduite 1, conforme à l'invention, comprenant un premier élément de conduite 17a, et les parties extrêmes de deux éléments de conduite 17b, 17c soudées aux extrémités respectives de l'élément de conduite 17a, et de manière identique des éléments de tube extérieur 10a, 10c et 10b pour réaliser l'enveloppe extérieure 10 de la conduite. La figure 3 montre également la disposition des patins 12 le long de ladite conduite.

En se référant à la figure 3 nous décrirons maintenant la structure d'un élément de conduite par exemple l'élément de conduite 17a. Cet élément de conduite 17a comprend une partie centrale et deux parties de faible longueur à chaque extrémité dudit élément de conduite 17a. Comme illustré sur la figure 3, la partie centrale de cet élément de conduite a une structure identique à la structure représentée sur la figure 2 et définie ci-dessus. Toutfois, il est préférable que le drain 7a dépasse légèrement à chaque extrémité de ladite partie centrale. Les deux parties extrêmes de l'élément 17a sont constituées par une partie du tube 2a métallique. De ce fait, il est aisé de souder les deux parties extrêmes de deux éléments de conduite adjacents, par exemple les parties extrêmes de l'élément de conduite 17a et de l'élément de conduite 17c pour réaliser le tube de transport 2.

Pour obtenir une structure de conduite sensiblement continue sur toute la longueur, on recouvre les extrémités de chaque élément de conduite 17a, 17c par un élément de joint 18.

Comme illustré sur la figure 3, cet élément de joint comprend une couche de tissu de verre 3d collée sur les parties extrêmes des conduites 17a et 17c pour réaliser la jonction entre les couches de tissu de verre 3a et 3c respectivement des éléments de conduite 17a, 17c. On colle sur ladite couche de tissu de verre 3d un élément de drain 7d de manière à relier le drain 7a de l'élément de conduite 17a au drain 7c l'élément de conduite 17c. Puis on dispose autour de l'ensemble une couche de calorifuge 4d constituée par deux demicoquilles maintenues en position serrée l'une contre l'autre par une enveloppe extérieure ou manchon 19 constituée de préférence en matière thermorétractable. La couche de calorifuge 4d peut être également réalisée de manière identique à la couche 4a, par injection de mousse de polyuréthane entre la couche de tissu 3d et une enveloppe métallique extérieure (non représentée).

De plus, pour compléter l'etanchéité, des manchons 20 de faible largeur sont collés autour de la ligne de jonction entre les couches de calorifuge 4a, 4d et 4c adjacentes. Ces manchons peuvent être soit une feuille métallique mince soit une feuille en matière plastique.

Les éléments de tube extérieur 10a, 10b et 10c sont soudés bout-à-bout pour constituer le tube extérieur 10 de la conduite 1.

Par ailleurs, on prévoit un joint de dilatation (non représenté) monté sur le tube d'acier interne 2 et réparti sur la longueur totale de la conduite, selon le principe décrit par exemple dans le brevet français FR—A—2 362 330 de la demanderesse.

Comme illustré schématiquement sur la figure 1, la structure composite constituée par la couche 4 de calorifuge et le drain 7 est subdivisée en sections adjacentes longitudinalement successives 1a à 1x, isolées de manière étanche les unes des autres. Dans le mode de réalisation préféré de l'invention, ces sections comprennent plusieurs éléments de conduite 17a, 17c . . ., et par exemple sont constituées de six éléments de conduite représentant une longueur de conduite d'environ 72 m.

La figure 3 montre la séparation entre deux sections adjacentes par exemple 1a et 1b. Cette séparation, selon un mode de réalisation préféré de l'invention, est obtenue par fixation d'un manchon d'obturation 21 sur une des extrémités du drain 7a et du calorifuge 4a de l'élément de conduite 17a d'extrémité de la section 1a.

Comme illustré sur la figure 3, l'extrémité de la section 1b est constituée par un élément de conduite 17b ne comprenant pas de manchon d'obturation 21. L'autre extrémité de la section 1a (non représentée) est identique à l'extrémité de la section 1b illustrée sur la figure 3, de manière analogue, l'autre extrémité de la section 1b (non représentée) est identique à l'extrémité de la section 1a montrée sur la figure 3.

Par ailleurs, chaque section indépendante 1a, 1b, 1c . . . 1x comprend un élément de conduite 17a sur lequel a été montée une soupape 22 à ouverture automatique permettant de mettre en communication le drain 7 de la section 1a avec l'espace annulaire 11. L'ouverture de la soupape est commandée par la pression régnant dans le drain 7 de la section 1a. Il est avantageux de régler l'ouverture de la soupape pour une pression suffisamment faible afin de ne pas provoquer le décollement du calorifuge 4 du tube de transport intérieur 2.

En outre, chaque section indépendante 1a, 1b, 1c . . . 1x comprend un élément de conduite, comme illustré sur la figure 3, l'élément de conduite 17b, sur lequel est fixé un détecteur 23 d'élévation de pression ou pressostat. Ce détecteur décèle une élévation de pression dans le drain 7 de la section correspondante, c'est-à-dire la section 1b de la figure 3.

Il est évident, sans sortir du cadre de l'invention, que chaque section indépendante peut comprendre plusieurs soupapes 22 et/ou plusieurs pressostats 23. En outre, la position des pressostats 23 et des soupapes 22 sur la longueur de la section indépendante considérée peut être quelconque. Toutefois selon un mode de réalisation préféré de l'invention, il est avantageux de disposer un pressostat 23 au voisinage d'une extrémité d'une section, et une soupape 22 au voisinage de l'autre extrémité de ladite section.

Selon une autre réalisation de l'invention, et en se référant aux figures 3, 4 et 5, des détecteurs de niveau 24 sont montés sur l'enveloppe imperméable 5. Selon un mode de réalisation de l'invention, ces détecteurs de niveau, par exemple des flotteurs à contact, sont répartis statistiquement sur la longueur totale de la conduite, de manière à être situés au niveau des points bas $P_b$ (figure 1) probables de la conduite.

Il est bien entendu évident que des câbles de connexion relient les différents détecteurs de niveau 24 et les différents pressostats 23 à un récepteur de signal ou moyens d'alarme.

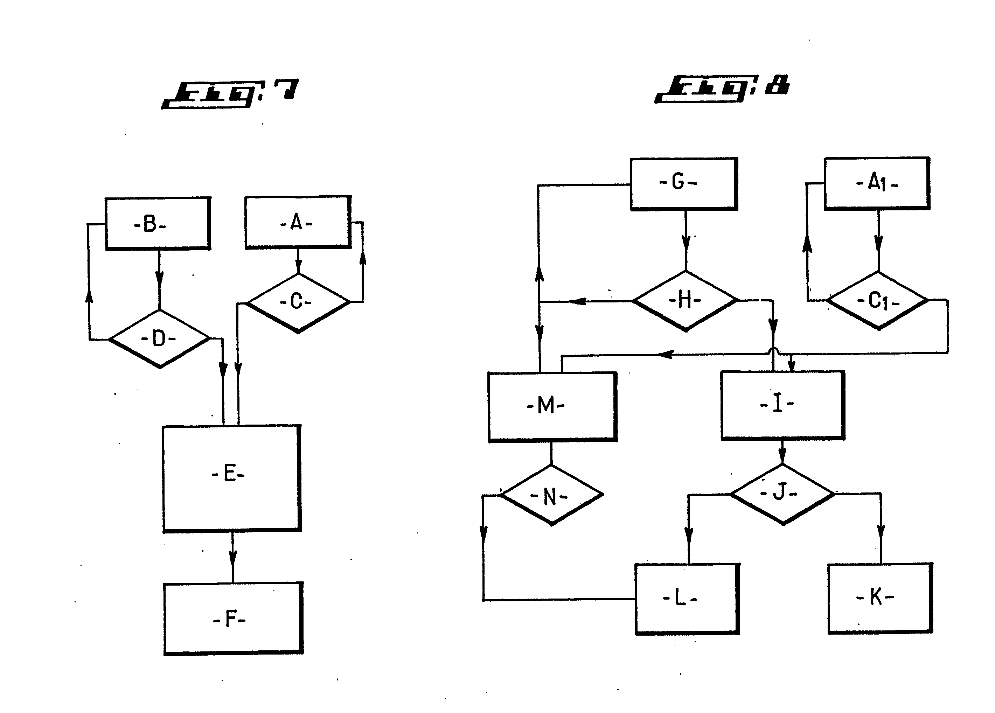

En se référant maintenant aux figures 4 et 5 nous décrirons les deux modes de réalisation préférés de l'invention, des moyens d'évacuation du fluide ambiant éventuellement accumulé dans l'espace annulaire 11. Selon un premier mode de réalisation, montré sur la figure 4 et sur la figure 2, ces moyens d'évacuation sont constitués par un tube 15 agencé à la partie la plus inférieure de l'espace annulaire 11. Ce tube s'étend sur toute la longueur de la conduite, et permet d'évacuer par pompage ou analogue le fluide ambiant accumulé. Ce tube d'évacuation est muni de plongeurs ou soupapes 25 à ouverture commandée à distance par un dispositif automatique tel que par exemple un dispositif à calorstat ou un dispositif à servo-valve hydraulique. De manière analogue, au détecteur de niveau 24, ces purgeurs sont répartis statistiquement sur la longueur du tube d'évacuation 15, de manière à ce qu'ils soient positionnés sensiblement au niveau d'un point bas $P_b$ (figure 1) de la conduite 1.

Selon un deuxième mode de réalisation, montré sur la figure 5, les moyens d'évacuation du fluide ambiant éventuellement accumulé dans l'espace annulaire 11 sont constitués par plusieurs tubes siphons 15a, 15b, 15c . . . de faible diamètre. Ces tubes siphons sont agencés dans la partie la plus inférieure de l'espace annulaire 11 et cahque tube siphon relie deux points bas $P_b$ successifs de la conduite 1. Comme montré sur la figure 5, la sortie d'un tube siphon 15a est située en aval de l'entrée du tube siphon successif 15b.

Après avoir assemblé et monté ces différents éléments sur un chantier terrestre, on enrobe ladite conduite 1 par une couche de protection en béton 14 et on immerge, selon un procédé très bien connu, la conduite 1 dans le milieu ambiant.

En se référant plus particulièrement à la figure 6, on décrira maintenant les moyens de détection globale et de détection locale des défauts d'étanchéité de la conduite 1, selon l'invention. Dans cette figure, les traits épais de liaison représentent le circuit du fluide auxiliaire et les traits fins de liaison représentent soit les liaisons de transmission de signaux d'alarme ou les liaisons de transmission de signaux de commande.

La détection globale de défaut d'étanchéité de la conduite 1 consiste à balayer l'espace annulaire 11 par un fluide auxiliaire comprenant en majeure partie de l'azote.

Selon un mode de réalisation préféré de l'invention, une installation de détection globale des défauts d'étanchéité comprend une source de fluide auxiliaire 26 constituée soit par un stock de gaz ou par un appareil à distillation d'air, producteur d'azote. Ladite source de fluide auxiliaire 26 est reliée à un dispositif d'alimentation 27 constitué avantageusement par une pompe et un compresseur permettant d'alimenter le fluide auxiliaire dans l'espace annulaire 11 sous un débit variable et une pression réglable. Le courant de fluide auxiliaire ressort de la conduite 1 par l'intermédiaire d'un conduit de circulation 16 s'étendant sur toute la longueur de la conduite et présentant une sortie à l'extrémité accessible de ladite conduite au voisinage du point P (figure 1). Ledit conduit de circulation 16 est relié à des moyens d'analyse et de contrôle 28 de la composition du flux sortant du fluide auxiliaire. Dans le cas d'une conduite sousmarine de transport de gaz liquéfié de pétrole, ces moyens d'analyse sont avantageusement constitués par un spectromètre infrarouge pour détecter les traces d'humidité dans le gaz auxiliaire et par un explosimètre pour déterminer en pourcentage, la limite inférieure d'explosivité du fluide transporté, éventuellement contenu dans le fluide auxiliaire. Puis le flux de gaz auxiliaire peut être soit recyclé dans le circuit de balayage ou évacué au moyen d'une vanne de sélection 29, selon que la détection par les moyens d'analyse 28 ait été respectivement négative ou positive.

Il est bien entendu que les moyens d'analyse 28 décrits ci-dessus ne sont données qu'à titre d'exemple et peuvent être remplacés par tout moyen d'analyse équivalent sans pour cela sortir de l'esprit de l'invention.

En outre, les moyens d'analyse 28 sont reliés à un système d'alarme qui permet de déclencher un dispositif de commande 31 pour actionner notamment la vanne de sélection 29.

Selon un mode de réalisation préféré de l'invention, la détection locale des défauts d'étanchéité de la conduite 1 comprennent tout d'abord un détecteur de niveau de fluide ambiant 24 monté dans ledit espace annulaire 11. Ces détecteurs de niveau 24 transmettent un signal, en cas d'accumulation locale de fluide ambiant dans l'espace annulaire 11, à un dispositif d'alarme 30 relié à un dispositif de commande 31 pour actionner les moyens d'évacuation du fluide ambiant. Ces moyens d'évacuation sont constitués soit par le conduit d'évacuation 15, et les purgeurs 25, soit par les tubes siphons 15a, 15b et par un moyen d'aspiration (non représenté) du fluide ambiant.

Les moyens de détection locale de défauts d'étanchéité, comprennent également les pressostats 23 montés dans chaque section 1a, 1b, 1c . . . 1x de la conduite 1. De manière analogue aux détecteurs de niveau, ces pressostats 23 transmettent un signal au dispositif d'alarme en cas de fuite du fluide transporté.

En se référant notamment aux figures 7, 8 on décrira maintenant le procédé, selon l'invention, de détection, à distance, des défauts d'étanchéité de la conduite 1.

Dans un premier temps, on décrira, en se référant plus particulièrement à la figure 7, le fonctionnement de la détection, à distance, des défauts d'étanchéité du tube interne de transport 2, en d'autres termes des fuites de fluide transporté.

Comme décrit précédemment, le tube de transport 2 est de préférence calorifugé avec une résine époxy à cellules fermées, donc dense. Selon l'invention, le fluide transporté fuyard suit le chemin de moindre résistance offert par la couche de tissu de verre 3. En raison de la pression du fluide transporté et de son poids, celui-ci se collecte et s'accumule dans la section de drain 7 correspondante. Le tissu de verre en canalisant les fuites de fluide transporté dans le drain, permet d'éviter une augmentation de pression entre le tube de transport 2 et le calorifuge 4 et un point quelconque de la conduite, une telle augmentation de pression pourrait éventuellement provoquer un décollement et une détérioration de ladite couche calorifuge 4.

L'accumulation du fluide transporté fuyard dans une section de drain 7 (par exemple le drain 7a correspondant à la section 1a de la conduite), induit une augmentation de pression dans ladite section de drain. Ainsi, la soupape 22 est ouverte par cette pression et permet au fluide transporté fuyard de s'échapper dans l'espace annulaire 11. Avantageusement, la soupape 22 est tarée à une pression suffisamment faible pour que la pression maximum régnant dans le drain 7 ne puisse provoquer un décollement de l'isolant du tube intérieur 2, par exemple à environ 2 bars.

Donc, lorsque la pression de fluide transporté fuyard accumulé dans une section de drain 7 atteint une certaine valeur, ce fluide se dégage et pollue le fluide auxiliaire de balayage de l'espace annulaire 11, et d'autre part le pressostat 23 de ladite section de drain émet un signal transmis au moyen d'alarme 30.

La figure 7 représente l'organigramme de la détection de fuite du fluide transporté. Cette détection consiste en une analyse continue A du flux de fluide auxiliaire sortant pour détecter la présence de fluide transporté, par exemple dans le cas de propane ou de butane ou analogue, la détermination en pourcentage de la limite inférieure d'explosivité, et en une surveillance continue B des presostats 23 montés sur chaque section indépendante de drain 1a, 1b . . . 1x. Lorsque le résultat de l'analyse C du flux sortant de fluide auxiliaire est positif, par exemple lorsque le pourcentage de la limite inférieure d'explosivité atteint un certain seuil (environ 30%), et lorsque au moins un des pressostats 23 émet un signal D, l'existence d'une fuite de fluide transporté sur le tube interne 2 est décelée de manière certaine (phase E). En outre, la localisation du pressostat émetteur d'un signal permet de situer la section indépendante de conduite 1a, 1b, 1c . . . 1x présentant un défaut d'étanchéité.

On déclenche alors la phase F qui consiste à augmenter le débit de balayage du fluide auxiliaire à une valeur supérieure à 10 N m³/h pour évacuer le fluide transporté fuyard présent dans l'espace annulaire 11. Bien entendu, pendant cette opération d'évacuation du fluide transporté fuyard, le fluide auxiliaire n'est pas recyclé et est rejeté à l'atmosphère par exemple par un mât de dégazage.

Dans le cas d'une analyse A négative du flux de fluide sortant auxiliaire, le débit de balayage du fluide auxiliaire est maintenu à une valeur d'environ 1 N m³/h.

Dans le cas d'une analyse négative du flux sortant du fluide auxiliaire, et d'émission d'un signal par au moins un des pressostats 23, le système d'alarme de présence de fuite de fluide transporté n'est pas déclenché, mais on réalise un contrôle du fonctionnement desdits pressostats.

Ainsi, le procédé de détection, à distance, des fuites de fluide transporté dans une conduite de transport, selon l'invention, permet, grâce aux deux détections simultanées ou concomitantes, respectivement locale et globale des fuites, de déterminer et de localiser, de manière certaine la présence d'une fuite de fluide transporté, et seulement dans ce cas d'intervenir sur la conduite pour réparer le défaut d'étanchéité ainsi détecté.

Il est bien entendu évident, que les moyens d'analyse sont adaptés à la nature du fluide transporté et que les moyens de détection locale comprennent tous les moyens permettant la détection locale d'un fluide dans un volume restreint.

On décrira maintenant, en se référant à l'organigramme de la figure 8, le procédé de détection de défaut d'étanchéité de l'enveloppe extérieure de la conduite, en d'autres termes les fuites de fluide ambiant.

En cas de défaut d'étanchéité de l'enveloppe constituée par le tube 10 et le béton 14, le fluide ambiant pénètre dans l'espace annulaire 11 et s'accumule au point bas $P_b$ de la conduite (illustré sur la figure 1). La présence de fluide ambiant dans cet espace annulaire 11 est détectée en continu par l'analyse du flux du fluide auxiliaire sortant, et lorsque la quantité de fluide ambiant accumulé atteint un certain niveau, les détecteurs de niveaux locaux 24 émettent un signal transmis au moyen d'alarme 30. Donc le procédé de détection de défaut d'étanchéité de l'enveloppe extérieure de la conduite 1 repose sur une double détection concomitante ou simultanée, respectivement globale et locale de la présence de fluide ambiant dans l'espace annulaire 11.

La figure 8 représente l'organigramme de la détection de fuite de fluide ambiant. Cette détection comprend l'analyse $A_1$ en continu du flux de fluide auxiliaire sortant par détermination de la présence de fluide ambiant dans le fluide auxiliaire, par exemple dans le cas d'une conduite sous-marine, analyse des traces d'humidité, et la surveillance G, en continu des détecteurs de niveau 24 répartis sur la longueur totale de la conduite, par exemple répartis environ tous les 100 m.

Dans le cas de réponses $C_1$, H négatives des opérations de détection $A_1$, G, l'enveloppe extérieure de la conduite ne présente aucun défaut d'étanchéité.

Si l'on a une réponse positive de l'analyse $A_1$ du fluide auxiliaire et l'émission d'un signal par au moins un détecteur de niveau 24, on détecte alors de manière certaine l'existence d'un défaut d'étanchéité sur l'enveloppe extérieure de la conduite et l'accumulation du fluide ambiant en un point bas de la conduite, localisée par la position du détecteur émettant le signal. Dans ce cas, on met en oeuvre la phase I du procédé qui consiste à pressuriser l'espace annulaire à une valeur supérieure à la pression du fluide ambiant, pour empêcher toute entrée ultérieure de fluide ambiant dans l'espace annulaire. Il est important de noter que cette pressurisation doit être réalisée sur la longueur totale de la conduite.

Dans le cas d'un maintien de la pression J, on évacue l'eau de l'espace annulaire 11 par des moyens d'évacuation agencés dans la conduite, cette phase est illustrée par la référence K sur la figure 8. Cette phase d'évacuation de l'eau est réalisée, dans un premier mode de réalisation préféré de l'invention, par ouverture des purgeurs 25 disposés sur le conduit 15 d'évacuation, commandés automatiquement ou manuellement par les moyens de commande 31 (figure 6). Selon un deuxième mode de réalisation préféré de l'invention, l'évacuation du fluide ambiant est réalisée par les tubes siphons 15a, 15b reliés à un dispositif d'aspiration (non représenté).

Dans le cas où la pression dans l'espace annulaire n'est pas maintenue on effectue la réparation L de l'enveloppe extérieure de la conduite.

Quand l'analyse $A_1$ du fluide auxiliaire de balayage donne une réponse $C_1$ positive, et quand aucun signal n'est détecté par la surveillance G du détecteur de niveau 24, il est avantageux de pressuriser l'espace annulaire 11 à une pression supérieure à la pression du fluide ambiant, pour empêcher toute entrée ultérieure de fluide ambiant dans ledit espace annulaire 11. En effet, dans ce cas, la fuite de fluide ambiant est faible et peut être facilement arrêtée par l'augmentation de pression dans l'espace annulaire. En outre, il est préférable d'augmenter le débit dudit fluide auxiliaire pour entraîner et éliminer le fluide ambiant.

Si on ne réalise pas le maintien de la pression N, il est alors nécessaire de procéder à la phase L de réparation de l'enveloppe extérieure.

Le procédé et le dispositif de détection des défauts d'étanchéité de l'enveloppe extérieure d'une conduite de transport de fluide, proposée par l'invention permet donc de détecter de manière certaine la présence d'un ou plusieurs défauts d'étanchéité de ladite enveloppe extérieure par la double détection simultanée de présence de fluide ambiant dans l'espace annulaire 11.

Un autre avantage important du procédé et du dispositif proposés par l'invention réside dans le fait que, même en cas d'existence de défaut d'étanchéité de l'enveloppe extérieure de la conduite, on peut continuer le transfert de fluide transporté vers ou depuis le point P, par simple pressurisation de l'espace annulaire 11. En effet, cette pressurisation stoppe l'entrée du fluide ambiant dans l'espace annulaire et permet d'attendre la fin de l'opération de transfert du fluide transporté pour réaliser la réparation de l'enveloppe extérieure.

Il est bien entendu, comme cela a déjà été décrit, que la détection de défauts d'étanchéité du tube de transport 2 et la détection de défauts d'étanchéité de l'enveloppe extérieure sont réalisés simultanément par une surveillance continue des détecteurs de niveau 24 et des pressostats 23, et une double analyse du flux sortant du fluide auxliaire pour détecter la présence de fluide ambiant et celle de fluide transporté.

La présente invention propose donc une conduite de transport de fluide, notamment une conduite sousmarine de transport de gaz liquéfié de pétrole, comprenant un dispositif de détection des défauts d'étanchéité du tube 2 de transport proprement dit et de l'enveloppe extérieure de ladite conduite.

Donc, l'invention permet de déterminer avec certitude, la nécessité d'une intervention manuelle pour réparer la conduite et, permet également de localiser cette intervention sur la longueur de la conduite, ceci est très important dans le cas où la conduite est d'un accès difficile dû à son immersion dans un fluide ambiant hostile pour l'être humain.

Bien entendu, l'invention n'est nullement limitée aux modes de réalisation décrits et représentés qui n'ont été donnés qu'à titre d'exemple. C'est ainsi que la nature du calorifuge, la nature du lest peuvent être quelconques sans sortir du cadre de l'invention. C'est dire que l'invention comprend tous les moyens constituant des équivalents techniques des moyens décrits ainsi que leurs combinaisons si celles-ci sont exécutées suivant son esprit et mises en oeuvre dans le cadre de la protection revendiquée.

**Revendications**

1. Procédé, notamment automatique, de détection et de localisation à distance de défauts d'étanchéité d'une conduite de transport d'un fluide quelconque immergée dans un fluide ambiant, du type consistant à entourer la conduite de transport de fluide d'une couche confinée de fluide auxiliaire interposée entre la conduite et le fluide ambiant, ledit fluide auxiliaire étant un mélange de gaz dont au moins le constituant principal est un gaz inerte tel que l'azote, comprenant une détection locale de fuite et une détection globale de fuite et l'émission d'un signal lors de la présence d'une fuite, caractérisé en ce que ladite opération de détection globale consiste à entourer constamment la conduite de transport (1) de ladite couche confinée (11) de fluide auxiliaire qui est à une pression inférieure aux pressions respectives du fluide transporté et du fluide ambiant, à maintenir constamment en circulation ledit fluide auxiliaire sur toute la longueur de ladite conduite, et à déceler la présence d'au moins un des fluides respectivement transporté ou ambiant dans ledit fluide auxiliaire au moyen d'une surveillance ou d'un contrôle continue de la composition du courant de fluide auxiliaire sortant à une extrémité accessible de la conduite telle qu'une analyse aux infrarouges ou la détermination de la limite inférieure d'explosivité dudit fluide.

2. Procédé selon la revendication 1, applicable à une conduite enrobée d'un couche de matière solide entourée par le fluide auxiliaire, caractérisé en ce que toute fuite de fluide transporté est canalisée généralement selon une direction circonférentielle le long de la paroi de ladite conduite (1) de façon à accumuler ledit fluide en un volume (7) d'accumulation continu et relativement réduit s'étendant le long de ladite conduite (1), et à transférer au moins partiellement la fuite accumulée au fluide auxiliaire précité, quand la pression du fluide transporté fuyard accumulé atteint une valeur prédéterminée.

3. Procédé selon la revendication 1, caractérisé en ce que la détection locale de fuite du fluide transporté consiste à confiner la fuite accumulée du fluide transporté en subdivisant le volume d'accumulation (7) en section adjacentes, isolées de manière étanche les unes des autres, à déceler dans chaque section précitée la présence du fluide transporté, et en cas de présence dudit fluide transporté à émettre un signal, quand la pression dudit fluide transporté dans ladite section atteint une valeur prédéterminée.

4. Procédé selon l'une des revendications précédentes, caractérisé en ce que la détection locale de la présence du fluide ambiant dans le fluide auxiliaire précité consiste à déceler en des points répartis statistiquement sur la longueur de la conduite et correspondant sensiblement aux points bas locaux de la conduite, la présence de fluide ambiant, et à émettre un signal quand le niveau du fluide ambiant localement accumulé dans l'espace de confinement (11) dudit fluide auxiliaire atteint une valeur prédéterminée.

5. Dispositif de détection et de localisation à distance de défauts d'étanchéité d'une conduite de transport d'un fluide quelconque immergée dans un milieu fluide et comprenant un tube intérieur de transport, notamment métallique entouré par un tube extérieur de préférence métallique, radialement espacé du tube intérieur en définissant un espace annulaire (11) susceptible d'être rempli d'un fluide auxiliaire, et des moyens de détection locale et des moyens de détection globale de fuite de l'un des fluides vers l'autre, lesdits moyens de détection globale comprenant une source (26) de fluide auxiliaire, un dispositif d'alimentation (27) du fluide auxiliaire sous un débit variable et sous une pression réglable, et des moyens d'alarme, caractérisée en ce que ledit espace annulaire (11) est continu et s'étend sensiblement sur toute la longueur de la conduite (1), au moins un conduit (16) de circulation dudit fluide auxiliaire est agencé dans l'espace annulaire (11) et s'étend sensiblement sur toute la longueur de la conduite (1), des moyens d'évacuation sélective (29) du fluide auxiliaire sont prévus à une extrémité accessible de la conduite, le dispositif d'alimentation (27) constitue des moyens de balayage de l'espace annulaire (11) par le fluide auxiliaire, et des moyens d'analyse (28) de la composition du flux sortant du fluide auxiliaire à ladite extrémité accessible de la conduite (1), lesdits moyens d'alarme (30) étant reliés aux moyens d'analyse (28).

6. Dispositif selon la revendication 5, du type comprenant un tube de transport calorifugé extérieurement à une enveloppe, de préférence imperméable de faible épaisseur entourant jointivement le calorifuge, caractérisée en ce qu'entre ledit tube (2) de transport et le calorifuge (4) sont interposés un dispositif de canalisation (3) des fuites de fluide transporté, et un dispositif de collecte (7) desdites fuites canalisées communiquant avec le dispositif de canalisation (3), ledit dispositif de collecte (7) ayant une section transversale réduite s'étendant sur toute la longueur du tube (2) et étant muni d'au moins un organe (22) tel qu'une soupape à ouverture automatique par la pression, de mise en communication avec l'espace annulaire (11) précité entourant ledit tube calorifugé (1).

7. Dispositif selon la revendication 6, caractérisée en ce que le dispositif de canalisation (3) précité est constitué par au moins une couche de tissu tel qu'un tissue de verre à bouclettes libres, résistant au fluide transporté, enroulée de manière continue autour du tube (2) précité, et le dispositif de collecte (7) précité est un conduit (8) en forme sensiblement d'auge fixé sur ledit tissu, et rempli d'une manière poreuse telle que par exemple une mousse polyuréthane à cellules éclatées.

8. Dispositif selon l'une des revendications 6 et 7, caractérisée en ce que le dispositif de collecte (7) précité est subdivisé en sections adjacentes longitudinalement successives, isolées de manière étanche les unes des autres, et les moyens de détection locale de fuite de fluide transporté comprenant ces sections et au moins un détecteur (23) tel qu'un capteur de pression agencé sur chaque section indépendante précitée, ledit détecteur (23) étant relié à des moyens d'alarme (30).

9. Dispositif selon l'une des revendications 5 à 8, caractérisée en ce que les moyens de détection locale de fuite de fluide ambiant comprennent des détecteurs (24) tels que des détecteurs de niveau de fluide ambiant, de présence de fluide ambiant dans l'espace annulaire (11) agencés dans ledit espace annulaire (11) en étant répartis sur la longueur totale de la conduite (1) à des positions correspondant sensiblement aux points bas locaux de ladite conduite (1), lesdits détecteurs (24) étant reliés à des moyens d'alarme (30), et des moyens d'évacuation dudit fluide ambiant fuyard dudit espace annulaire (11) tels que des purgeurs (25) et conduits d'évacuation (15, 15a, 15b).

**Patentansprüche**

1. Insbesondere selbsttätiges Verfahren zur Fernsuche und -ortung von Undichtigkeiten einer in einem flüssigen bzw. gasförmigen Umgebungsmedium eingetauchten Leitung zur Beförderung irgendeines fliessfähigen Mittels, derjenigen Bauart, die darin besteht, die Leitung zur Beförderung des fliessfähigen Mittels mit einer zwischen der Leitung und dem flüssigen bzw. gasförmigen Umgebungsmedium zwischengeschalteten, eingeschlossenen Schicht eines fliessfähigen Hilfsmittels zu umgeben, wobei das fliessfähige Hilfsmittel ein Gasgemisch ist, wenigstens dessen Hauptbestandteil ein Inertgas wie Stickstoff ist, mit einer örtlichen Lecksuche und einer Gesamtlecksuche und der Aussendung eines Signals beim Vorhandensein einer Undichtigkeit, dadurch gekennzeichnet, dass der besagte Vorgang der Gesamtsuche darin besteht, die Förderleitung (1) ständig mit der besagten eingeschlossenen Schicht (11) des fliessfähigen Hilfsmittels, welches unter einem niedrigeren Druck als die jeweiligen Drücke des beförderten fliessfähigen Mittels und des flüssigen bzw. gasförmigen Umgebunsmediums, ist, zu umgeben, das besagte fliessfähige Hilfsmittel über die ganze Länge der besagten Leitung ständig strömen zu lassen und das Vorhandensein von wenigstens des beförderten fliessfähigen Mittels oder des flüssigen bzw. gasförmigen Umgebungsmediums in dem besagten fliessfähigen Hilfsmittel aufzuspühren mittels einer stetigen Uberwachung bzw. Kontrolle der Zusammensetzung des an einem zugänglichen Ende der Leitung ausfliessenden Stromes des fliessfähigen Hilfsmittels, wie einer Analyse mit infraroten Strahlen oder der Bestimmung der unteren Explosionsbarkeitsgrenze des besagten fliessfähigen Mittels.

2. An eine mit einer von dem fliessfähigen Hilfsmittel umgebene Feststoffschicht ummantelten Leitung anwendbares Verfahren nach Anspruch 1, dadurch gekennzeichnet, dass jeder Leckverlust des beförderten Fliessmittels im Allgemeinen in einer Umfangsrichtung entlang der Wandung der besagten Leitung (1) kanalisiert wird, um das besagte Fliessmittel in einem sich entlang der besagten Leitung (1) erstreckenden, durchgehenden und verhältnismässig kleinen Sammelraum (7) anzusammeln und die angesammelte Leckmenge wenigstens teilweise dem vorgenannten fliessfähigen Hilfsmittel zu überführen, wenn der Druck der angesammelten Leckmenge des beförderten Fliessmittels einen vorbestimmten Wert erreicht.

3. Verfahren nach Anspruch 2, dadurch gekennzeichnet, dass die örtliche Förderfliessmittellecksuche darin besteht, die angesammelte Leckmenge des Förderfliessmittels einzugrenzen durch Aufteilung des Sammelraumes (7) in aneinander anschliessenden, voneinander in abdichtender Weise getrennten Abschnitte, einzugrenzen, in jedem vorgenannten Abschnitt das Vorhandensein des Förderfliessmittels aufzuspühren und bei Vorhandensein des besagten Förderfliessmittels ein Signal auszusenden, wenn der Druck des besagten Förderfliessmittels in dem besagten Abschnitt einen vorbestimmten Wert erreicht.

4. Vorrichtung nach einem der vorangehenden Ansprüche, dadurch gekennzeichnet, dass die örtliche Suche nach dem Vorhandensein des fliessfähigen Umgebungsmediums in dem vorgenannten fliessfähigen Hilfsmittel darin besteht, das Vorhandensein des fliessfähigen Umgebungsmediums an über die Länge der Leitung statistisch verteilten, im wesentlichen den örtlichen Tiefpunkten der Leitung entsprechenden, Stellen auszupühren und ein Signal auszusenden, wenn die Höhe des in dem Einschliessungsraum (11) des besagten fliessfähigen Hilfsmittels örtlich angesammelten fliessfähigen Umgebungsmediums einen vorbestimmten Wert erreicht hat.

5. Vorrichtung zur Fernsuche und -ortung von Undichtigkeiten einer in einem fliessfähigen Medium eingetauchten Leitung zur Beförderung irgendeines fliessfähigen Mittels mit einem inneren insbesondere metallischen Förderrohr dass von einem vorzugsweise metallischen Aussenrohr umgeben, ist, welches in einem radialen Abstand von dem Innenrohrs liegt unter Bildung eines mit einem fliessfähigen Hilfsmittel füllbaren ringförmigen Raumes (11) und Mitteln zur örtlichen Suche sowie Mitteln zur Gesamtsuche von Leckverlusten von einem Fliessmittels zum anderen hin, wobei die besagten Gesamtsuchmittel eine Hilfsfliessmittelquelle (26), eine Vorrichtung (27) zur Zufuhr des Hilfsfliessmittels unter veränderlichen Durchsatzmenge und veränderlichem Druck, und Alarmmittel aufweisen, dadurch gekennzeichnet, dass der besagte ringförmige Raum (11) durchgehend ist und sich im wesentlichen über die ganze Länge der Leitung (1) erstreckt, dass wenigstens eine Leitung (16) für die Strömung des Hilfsfliessmittels in dem ringförmigen Raum (11) angeordnet ist und sich im wesentlichen über die ganze Länge der Leitung (1) erstreckt, dass Mittel (29) zur wahlweisen Abfuhr des Hilfsfliessmittels an einem zugänglichen Ende der Leitung vorgesehen sind, dass die Zufuhrvorrichtung (27) Mittel zur Spühlung des ringförmigen Raumes (11) durch das Hilfsfliessmittel bildet, und mit Mitteln (28) zur Analyse der Zusammensetzung des Ausflusses des Hilfsfliessmittels an dem besagten zugänglichen Ende der Leitung (1), wobei die besagten Alarmmittel (30) an die Analysenmittel (28) angeschlossen sind.

6. Vorrichtung nach Anspruch 5, der Bauart mit einem Förderrohr das ausserhalb einem dem Wärmedämmstoffs fugendicht umgebenden, vorzugsweise undurchlässigen Mantel schwacher Stärke wärmeisoliert ist, dadurch gekennzeichnet, dass zwischen dem besagten Förderrohr (2) und dem Wärmedämmstoff (4) eine Vorrichtung (3) zum Kanalisieren der Leckmengen des Förderfliessmittels und eine mit der Kanalisierungsvorrichtung (3) in Verbindung stehende Vorrichtung (7) zum Sammeln der besagten kanalisierten Leckmengen zwischengeschaltet sind, wobei die besagte Sammelvorrichtung (7) einen über die ganze Länge des Rohres (2) verlaufenden verkleinerten Querschnitt hat und mit wenigstens einem Glied (22), wie einem sich durch den Druck selbsttätig öffnenden Ventil zur Verbindung mit dem das besagte wärmeisolierte Rohr (1) umgebenden vorgenannten ringförmigen Raum (11), versehen ist.

7. Vorrichtung nach Anspruch 6, dadurch gekennzeichnet, dass die vorgenannte Kanalisierungsvorrichtung (3) durch wenigstens eine durchgehend um das vorgenannte Rohr (2) herumgewickelte Schicht aus gegenüber dem Förderfliessmittel wiederstandsfähigem Stoff, wie einem Glasfasergewebe mit freinen Schliefchen, gebildet ist und dass die vorgenannte Sammelvorrichtung (7) ein an dem besagten Gewebe befestigter, mit einem porösen Stoff wie zum Beispiel einem Polyurethanschaum mit geborstenen Zellen gefüllter und im wesentlichen trogförmiger Kanal (8) ist.

8. Vorrichtung nach einem der Ansprüche 6 und 7, dadurch gekennzeichnet, dass die vorgenannte Sammelvorrichtung (7) in in Längsrichtung aufeinanderfolgende, in abdichtenderweise voneinander getrennte, aneinander anschliessende Abschnitte unterteilt ist, wobei die Mittel zur örtlichen Such nach den Leckverlusten des Förderfliessmittels diese Abschnitte und wenigstens einen an jedem vorgenannten unabhängigen Abschnitt angeordneten Messfühler (23) wie einen Druckmesswertgeber aufweisen, wobei der besagte Messfühler (23) an die Alarmmittel (30) angeschlossen ist.

9. Vorrichtung nach einem der Ansprüche 5 bis 8, dadurch gekennzeichnet, dass die Mittel zur örtlichen Suche nach Leckmengen des fliessfähigen Umgebundsmediums Messfühlgeräte (24), wie Messwertgeber für den Stand des fliessfähigen Umgebungsmediums, zum Aufspühren des Vorhandenseins des fliessfähigen Mediums in dem Ringförmigen Raum (11) umfasst, welche in dem besagten ringförmigen Raum (11) angeordnet und über die Gesamtlänge der Leitung (1) an im wesentlichen den örtlichen Tiefpunkten der besagten Leitung (1) entsprechenden Stellen verteilt sind, wobei die besagten Messfühlgeräte (24) an die Alarmmittel (30) angeschlossen sind, und mit Mitteln zur Abfuhr der Leckmengen des besagten fliessfähigen Umgebungsmediums aus dem besagten ringförmigen Raum (11) wie Ablasshähne (25) und Ablassleitungen (15), 15a, 15b).

## Claims

1. A process, particularly an automatic process, for remote detection and location of leakage from a pipe line for the transmission of any fluid, immersed in an ambient fluid, of the type consisting in surrounding the pipe line with a confined layer of auxiliary fluid interposed between the pipe line and the ambient fluid, the said auxiliary fluid being a gas mixture at least the main constituent of which is an inert gas such as nitrogen, including a local leakage detection and a global leakage detection and the transmission of a signal in case of leakage, characterized in that said global detection consists in constantly surrounding the pipe line 1 with the said confined layer 11 of auxiliary fluid which is at a pressure lower than the respective pressures of the fluid being transmitted and of the ambient fluid, constantly keeping in circulation the said auxiliary fluid over the whole length of the said pipe line, and in detecting the presence of at least one, or of both, of the transmitted and ambient fluids in the said auxiliary fluid by continuously controlling or checking the composition of the auxiliary fluid flow issuing at an accessible end of the conduit, e.g. by means of infra-red analysis or by determining the lower limit of explosivity of the fluid.

2. A process according to claim 1, applicable to a pipe line coated with a layer of solid material surrounded by the auxiliary fluid, characterized in that any leakage fluid from the pipe line is channeled generally in a circumferential direction along the wall of the said pipe line 1 so as to accumulate the said fluid in a continuous and relatively reduced accumulation volume (7) extending along the said conduit (1), and to transfer at least partially the accumulated leakage fluid to the aforesaid auxiliary fluid, when the pressure of the said accumulated leakage fluid reaches a predetermined value.

3. A process according to claim 2, characterized in that the local detection of transmitted fluid leakage consists in confining the said accumulated leakage fluid by subdividing the accumulation volume (7) into adjacent sections isolated in a fluid-tight manner from one another, in detecting in each said section the presence of the transmitted fluid, and, if such fluid is present, in transmitting a signal when the pressure of the said fluid in the said section reaches a predetermined value.

4. A process according to one of the foregoing claims, characterized in that the local detection of the presence of ambient fluid in the aforesaid auxiliary fluid consists in detecting, at points distributed statistically along the pipe line and corresponding substantially to the local lower points of the pipe line, the presence of ambient fluid, and in transmitting a signal when the level of the ambient fluid locally accumulated in the space (11) of confinement of the said auxiliary fluid reaches a predetermined value.

5. A device for remote detection and location of leakage from a pipe line for the transmission of any fluid, immersed in a fluid medium and including an internal transmission pipe, in particular of metal, surrounded by an external pipe preferably of metal, radially spaced from the internal pipe and thus defining an annular space (11) capable of being filled with an auxiliary fluid, and means for local detection and means of global detection of leakage from one of the fluids towards the other, the said global detection means including a source (26) of auxiliary fluid, a device (27) for the supply of auxiliary fluid at a variable flow rate and an adjustable pressure, and alarm means, characterized in that the said annular space (11) is continuous and extends over substantially the whole length of the pipe line (1), at least one duct (16) for the circulation of the said auxiliary fluid is arranged in the annular space (11) and extends over substantially the whole length of the pipe line (1), means (29) for selective discharge of the auxiliary fluid are provided at an accessible end of the pipe line, the supply device (27) constitutes a means for scanning the annular space (11) with the auxiliary fluid, and means (28) for analyzing the composition of the issuing flow of auxiliary fluid at the said accessible end of the pipe line (1), said alarm means (30) being connected to the analyzing means (28).

6. A device according to claim 5, of the type including an externally heat-insulated transmission pipe and a preferably impervious covering of small thickness, sealingly surrounding the heat-insulating material, characterized in that, between the transmission pipe (2) and the heat-insulating material (4) are interposed a device (3) for channeling the leakage fluid from the said transmission pipe, and a device (7) for collecting the said channeled leakage fluid, communicating with the said channeling device (3), the said collecting device having a reduced cross section extending over the whole length of the pipe (2) and being provided with at least one member (22), such as a valve adapted to be automatically opened by the pressure, for connection with the aforesaid annular space (11) surrounding the said heat-insulated pipe (2).

7. A device according to claim 6, characterized in that the aforesaid channeling device 3 is constituted by at least one layer of cloth such as glass cloth with free small loops, resisting to the transmitted fluid, wound continuously around the aforesaid pipe (2), and the aforesaid collecting device (7) is a duct (8) substantially in the form of a trough secured on the said cloth and filled with a porous material such as for example polyurethane foam with exploded cells.

8. A device according to one of claims 6 and 7, characterized in that the aforesaid collecting device (7) is subdivided into longitudinally successive adjacent sections isolated in a fluid-tight manner from one another, and the means for local detection of leakage of the transmitted fluid including these sections and at least one detector (23) such as a pressure pick-up arranged on each aforesaid independent section, the said detector (23) being connected to alarm means (30).

9. A device according to one of claims 5 to 8, characterized in that the means for local detection of leakage of the ambient fluid includes detectors (24) such as detectors of the level of the ambient fluid, of the presence of ambient fluid in the annular space (11) arranged in the said annular space (11) and distributed over the whole length of the pipe line (1) at positions corresponding substantially the local lower points of said pipe line (1), the said detectors (24) being connected to alarm means (30), and means for discharging the said leakage ambient fluid from the said annular space 11 such as bleeders 25 and discharge ducts (15, 15a, 15b).

**Fig.1**

P
1
1a
Q
1b
$P_H$
I
II
1c
III
IV
$P_B$

**Fig.4**

17
11
14
10
25
24
15

**Fig.5**

17
14
10
11
15a
15b

**Fig. 2**

**Fig. 6**

Fig.3

Fig. 7

Fig. 8

0 053 546